# EUROPÄISCHE PATENTSCHRIFT

(11) **EP 0 845 074 B1**
(45) Veröffentlichungstag und Bekanntmachung des Hinweises auf die Patenterteilung: **31.03.1999**
(21) Anmeldenummer: 96927698.9
(22) Anmeldetag: 06.08.1996
(51) Int. Cl.: F01N 3/28, F01N 3/20

(54) **KATALYSATOR ZUR VERRINGERUNG VON KOHLENWASSERSTOFF IN ABGASEN EINES KRAFTFAHRZEUGES**
CATALYSER FOR REDUCING HYDROCARBONS IN THE EXHAUST GASES OF A MOTOR VEHICLE
CATALYSEUR POUR LA REDUCTION DES HYDROCARBURES DANS LES GAZ D'ECHAPPEMENT D'UN VEHICULE A MOTEUR

(30) Priorität: 16.08.1995 DE 19530142; 22.09.1995 DE 19535289
(43) Veröffentlichungstag der Anmeldung: 03.06.1998
(73) Patentinhaber: Emitec Gesellschaft für Emissionstechnologie mbH, 53797 Lohmar (DE)
(72) Erfinder: Reck, Alfred, D-51515 Kürten (DE); Siepmann, Uwe, D-51103 Köln (DE)
(74) Vertreter: Kahlhöfer, Hermann, Dipl.-Phys.
(86) Internationale Anmeldenummer: EP9603482
(87) Internationale Veröffentlichungsnummer: WO9707327

(56) Entgegenhaltungen:
- EP-A- 0 441 062
- EP-A- 0 473 081
- DE-A- 2 436 559
- DE-A- 3 715 040
- GB-A- 2 231 283
- US-A- 3 584 701
- US-A- 4 195 063
- PATENT ABSTRACTS OF JAPAN vol. 18, no. 495 (C-1250), 16.September 1994 & JP 06 165940 A (USUI INTERNATIONAL), 14.Juni 1994,
- PATENT ABSTRACTS OF JAPAN vol. 010, no. 273 (M-518), 17.September 1986 & JP 61 096120 A (YAMAHA MOTOR CO.), 14.Mai 1986,

## Beschreibung

Die vorliegende Erfindung betrifft einen Katalysator für Fahrzeuge mit Verbrennungsmotoren, insbesondere zum katalytischen Reinigen von Abgas mit großen Anteilen von Kohlenwasserstoffen.

Im Zuge der weltweit immer strenger werdenden Anforderungen an die Abgasreinigung von Kraftfahrzeugen sind zahlreiche Ausführungsformen für Katalysatoren entwickelt worden. Eine Art von Katalysatoren weist zumindest teilweise mit katalytisch aktivem Material beschichtete Metallfolien auf, welche in einem Mantelrohr angeordnet sind. Für solche Katalysatoren sind zahlreiche Bauformen mit unterschiedlichen Strukturen der Metallfolien bekannt.

Obwohl Katalysatoren, bei denen das katalytisch aktive Material auf Metallfolien aufgebracht ist, sehr gute Eigenschaften in Bezug auf die Wärmeleitung und Wärmeverteilung besitzen, kann bei bestimmten Anwendungsfällen durch die exotherme Reaktion im Katalysator dennoch eine Überhitzung auftreten. Um dies zu vermeiden, ist aus der DE 36 35 993 A1 bereits ein Katalysator bekannt, der so ausgebildet ist, daß er einen zentralen Bereich der vom Abgas durchströmten Querschnittsfläche freiläßt, um eine Überhitzung zu vermeiden. Ein solcher Wabenkörper ist auch aus der EP 0 270 856 A1 bekannt.

Bei diesen bekannten Katalysatoren ist es jedoch immer noch das Ziel, einen möglichst großen Anteil des Abgases zu reinigen und nur einen kleinen Teil im Zentralbereich ungehindert durchzulassen, um in diesem Bereich eine Überhitzung zu vermeiden, wie sie bei einem vollständig den Abgasquerschnitt ausfüllenden Wabenkörper auftreten könnte.

Es gibt allerdings Anwendungsfälle, bei denen das Abgas von Verbrennungsmotoren so große Anteile an Kohlenwasserstoffen enthält, daß auch die bekannten Wabenkörper sich überhitzen würden, wenn sie die Kohlenwasserstoffanteile katalytisch umsetzen würden. Insbesondere bestimmte 2-Takt-Motoren älterer Bauart erzeugen Kohlenwasserstoffkonzentrationen von bis zu 4 Volumenprozent im Abgas, die bei vollständiger katalytischer Verbrennung sehr große Wärmemengen freisetzen. Dies könnte zwar mit großvolumigen Katalysatoren beherrscht werden, jedoch steht dafür oft nicht genug Raum zur Verfügung. Trotzdem ist es wünschenswert, diesen hohen Schadstoffanteil mit vertretbarem Aufwand zu verringern, um wenigstens bestimmte Mindestanforderungen bezüglich des Schadstoffausstoßes einhalten zu können.

In der GB 2 231 283 A werden schon verschiedene Wabenkörper beschrieben, die einen von Blechlagen völlig freien Zentralbereich aufweisen und nur in einem äußeren Bereich der Querschnittsfläche Kanäle bildende Blechlagen zur Schaffung von katalytisch aktiven Oberflächen haben. Bei diesen Ausführungsformen begrenzt immer eine glatte Blechlage den freien Zentralbereich, so daß einmal innerhalb dieses Zentralbereiches befindliches Abgas nur noch mit der kleinen katalytisch aktiven Oberfläche dieser innersten glatten Blechlage in Kontakt kommen kann.

Aufgabe der vorliegenden Erfindung ist daher die Schaffung eines Katalysators, der Abgase mit hohen Kohlenwasserstoffkonzentrationen von z. B. 2-4 Volumenprozent zumindest teilweise katalytisch umsetzen kann, ohne dabei überhitzt zu werden. Gleichzeitig soll der Aufbau möglichst einfach und auch in kleinere Fahrzeuge integrierbar sein.

Zur Lösung dieser Aufgabe dient ein Katalysator gemäß dem Anspruch 1 sowie eine Katalysatorschaltung mit den Merkmalen des Anspruchs 18. Vorteilhafte Ausgestaltungen sind in den abhängigen Ansprüchen angegeben.

Untersuchungen haben gezeigt, daß es für eine katalytische Umsetzung eines erheblichen Teils von Kohlenwasserstoffen in einem Abgas ausreicht, dieses durch ein Mantelrohr zu leiten, welches in der Nähe seiner Innenoberfläche zumindest teilweise mit katalytisch aktivem Material beschichtete Metallfolien aufweist, wobei der überwiegende Teil der Querschnittsfläche des Mantelrohres frei von solchen Metallfolien ist. Bei einem mit einem katalytisch aktiven Material beschichteten Wabenkörper, der den gesamten Querschnitt eines Mantelrohres ausfüllt, findet entsprechend dem Strömungsprofil die stärkste exotherme Reaktion im Zentralbereich statt, und zwar im allgemeinen in einer axial nur kurzen Zone des Wabenkörpers. Gleichzeitig kann die Wärme aus dem Inneren des Wabenkörpers wegen dessen Wabenstruktur nur schwer nach außen an das Mantelrohr abgeführt werden. Läßt man hingegen den überwiegenden Teil der Querschnittsfläche des Mantelrohres frei von Metallfolie und ordnet solche Metallfolien mit katalytisch aktivem Material im wesentlichen in der Nähe der Innenoberfläche des Mantelrohres an, so kann zunächst die durch exotherme Reaktionen entstehende Wärme leichter abgeführt werden. Statt in einer axial kurzen Zone findet nun aufgrund von Diffusionsprozessen in der Abgasströmung eine katalytische Reaktion über die ganze Länge der beschichteten Metallfolie statt, so daß auch bei dieser Anordnung ein erheblicher Anteil der Kohlenwasserstoffe in unschädliche Komponenten (Kohlendioxyd und Wasser) umgesetzt werden kann.

Für die Einhaltung weniger strenger Abgasvorschriften kann schon eine einzige Lage einer Metallfolie mit ganz oder teilweise katalytisch aktivem Material ausreichen. Zur Vergrößerung der katalytisch aktiven Oberfläche kann die Metallfolie zumindest in Teilbereichen strukturiert sein, insbesondere in Wellenform. Diese Strukturen können auch komplizierter ausfallen, z. B. Wellen mit Querrippen, Schlitzen oder Mikrostrukturen oder andere Geometrien.

Befestigt werden können Metallfolien untereinander und/oder am Mantelrohr durch Löten, wie dies bei metallischen Wabenkörpern an sich bekannt ist. Insbesondere genügt es, eine Metallfolie im Stirnbereich des Mantelrohres einzulöten. Weiterhin ist es günstig, die Metallfolie vorzubehandeln, z. B. weichzuglühen, damit sich eine Oxidschicht bildet. Ebenso ist aber auch schweißen, z. B. in Form von Punktschweißungen möglich.

Für strengere Abgasvorschriften kann es erforderlich sein, mehrere Lagen von Metallfolien, z. B. 2-6 in der Nähe der Innenoberfläche des Mantelrohres anzuordnen, wobei diese so strukturiert sind, daß sie für das Abgas durchlässige Kanäle bilden. Insbesondere können diese Lagen durch spiraliges Aufwickeln von strukturierten Metallfolien, insbesondere glatten und gewellten Folien, gebildet werden.

Die Form und Größe der Strukturen der Metallfolie soll vorzugsweise so sein, daß sie Kanäle einer Querschnittsfläche bilden, wie sie bei Wabenkörpern mit 25-200 cpsi (cells per square inch) auftritt. Dies bedeutet, daß z.B. Amplituden der Wellung von etwa 1,5-6 mm bei typischen Wellformen auftreten. Die genaue Form der Wellung ist jedoch für die vorliegende Erfindung von untergeordneter Bedeutung, so daß hier zahlreiche Variationsmöglichkeiten bestehen.

Zur Verbesserung der Umsetzung des Abgases durch Querströmungen und Verwirbelungen ist es vorteilhaft, die Metallfolie mit Perforationslöchern zu versehen, die beispielsweise einen Durchmesser von 2-6 mm aufweisen können.

Eine ebenfalls turbulente Strömung wird dadurch erreicht, daß die Metallfolie wendelförmig gewickelt vorliegt. Dies bietet zum einen die Möglichkeit, eine derartige Metallfolie aus einem Stück zu fertigen. Zum anderen wird durch geeignete Wicklung dafür gesorgt, daß das durch die entstehenden Spalten hindurch- oder vorbeiströmende Abgas ausreichend durchmischt wird. Dabei ist die Steigung der Wendel bevorzugt so, daß die Windungen sich nicht überlappen, sondern mit geringem Abstand von z. B. 1 - 10 mm liegen. Dadurch lassen sich auch gekrümmte Rohre auskleiden.

Das Mantelrohr selbst kann zylindrisch ausgebildet sein oder sich konisch erweitern. Aus der EP 0 386 013 B1 ist die Anordnung eines Diffusors bzw. Konfusors vor bzw. hinter dem Katalysatorkörper bekannt. Aus DE 37 19 773 A1 ist ebenfalls ein Trägerkörper für einen katalytischen Reaktor zur Abgasreinigung bekannt, der kegelig ausgebildet ist, und dem eine ebenfalls kegelige Mantelhülse zugeordnet ist. Auch ovale Querschnittsformen des Mantelrohres sind möglich.

Um den zur Verfügung stehenden Raum besser ausnutzen zu können, kann der Katalysatorbereich auch auf gekrümmte Mantelrohrbereiche ausgedehnt werden. Dieses wäre besonders sinnvoll z. B. für Abgasleitungen von Motorrädern.

Als Material für die Metallfolien kommen die üblichen hochtemperaturkorrosionsbeständigen Materialien in Betracht, insbesondere Materialien wie der Werkstoff 1.4767 oder Materialien mit ähnlichen Eigenschaften.

Ein weiteres besonders vorteilhaftes Ausführungsbeispiel der Erfindung wird aus der Kombination eines oben beschriebenen erfindungsgemäßen Katalysators, im folgenden als Vorkatalysator bezeichnet, mit einem nachfolgenden Hauptkatalysator geschaffen. Der Vorkatalysator wird bevorzugt zylindrisch oder konisch dem, strömungsmäßig gesehen, nachfolgenden Katalysator vorgeschaltet. Zum Starten eines Verbrennungsmotors läßt sich dadurch ein schnelleres Erreichen der Anspringtemperatur des Hauptkatalysators erreichen und damit verbunden eine bessere Umsetzungsrate der Verbrennungsgase erzielen. Weiterhin wirkt der Vorkatalysator auch als Isolierung des Abgasstroms zur Umgebung, wobei es, aufgrund des schnelleren Erreichens der Anspringtemperatur, auch zu einem zügigeren Aufheizen des nachfolgenden Katalysators durch die Verbrennung von zumindest einem Teil der gebildeten Kohlenwasserstoffe kommt. Die Startphase des Motors kann auch durch eine elektrische Aufheizung des Vorkatalysators im Abgasverhalten weiter verbessert werden. Die Aufheizung kann besonders zügig erfolgen. Besonders bevorzugt wird ein konisch geformter Vorkatalysator verwendet, da dieser einen Teil des Massenstromes in der Nähe der Rohraußenwand praktisch abteilt und dem Randbereich des nachfolgenden Katalysators zuführt. Er dient somit insbesondere als Strömungsgleichrichter.

Ausführungsbeispiele der Erfindung, auf die diese jedoch nicht beschränkt ist, sind in der Zeichnung dargestellt, und zwar zeigen
- Figur 1: einen Querschnitt durch einen erfindungsgemäßen Katalysator,
- Figur 2: einen Längsschnitt durch diesen Katalysator,
- Figur 3: in schematischer Darstellung ein anderes Ausführungsbeispiel der Erfindung mit perforierten Metallfolien,
- Figur 4: eine wendelförmige Metallfolie in einem gekrümmten Mantelrohr,
- Figur 5: eine wendelförmige Metallfolie,
- Figur 6: einen erfindungsgemäßen Katalysator als Vorkatalysator mit nachgeordnetem Hauptkatalysator und
- Figur 7: einen erfindungsgemäßen konischen Katalysator mit einem elektrischen Anschluß als Vorkatalysator und nachgeschaltetem Hauptkatalysator.

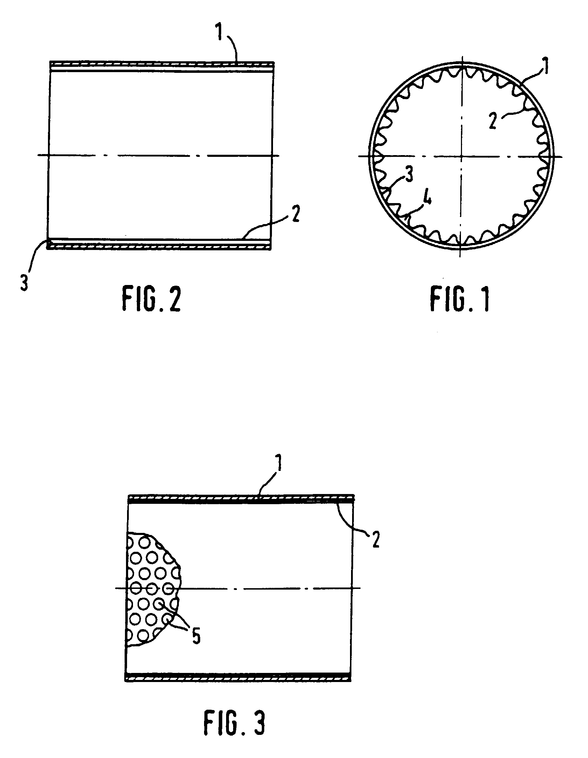

In den Figuren 1 und 2 ist nur eine gewellte Metallfolie 2 an der Innenoberfläche 3 eines Mantelrohres 1 angeordnet. Die gewellte Metallfolie bildet so eine vergrößerte Oberfläche, die mit katalytisch aktivem Material beschichtet werden kann. Dabei kann die Beschichtung nur auf der Innenseite der Metallfolie oder auf beiden Seiten vorgesehen werden. Die bei der katalytischen Reaktion entstehende Wärme kann bei dieser Ausführungsform leicht an das Mantelrohr 1 abgeführt werden. Durch hier nicht dargestellte Perforationslöcher kann die Wirksamkeit der Anordnung erhöht werden, insbesondere mit einer beidseitig katalytisch aktiven Beschichtung der Metallfolie. Die gewellte Metallfolie 2 bildet mit dem Mantelrohr 1 zusammen Kanäle 4 welche jeweils eine bestimmte Querschnittsfläche aufweisen. Für vollständig mit solchen Kanälen ausgefüllte Wabenkörper ist die Einheit cpsi (cells per square inch) gebräuchlich, so daß generell auch die Größe einzelner Kanäle auf diese Einheit bezogen werden kann. Gemäß der vorliegenden Erfindung sollen Kanäle mit einer Querschnittsfläche gebildet werden, wie sie bei Wabenkörpern mit 25-200 cpsi auftritt. Durch spiraliges Aufwickeln von mehreren abwechselnd geschichteten unterschiedlich strukturierten Metallfolien kann eine größere katalytisch aktive Fläche geschaffen werden, wobei jedoch darauf zu achten ist, daß der überwiegende Teil des Querschittes zur Vermeidung von Überhitzungen frei bleibt.

Figur 3 zeigt, daß im einfachsten Fall bereits eine Metallfolie 2 mit Perforationslöchern 5, die an der Innenoberfläche 3 des Mantelrohres 1 angeordnet ist, für eine katalytische Umsetzung ausreichen kann.

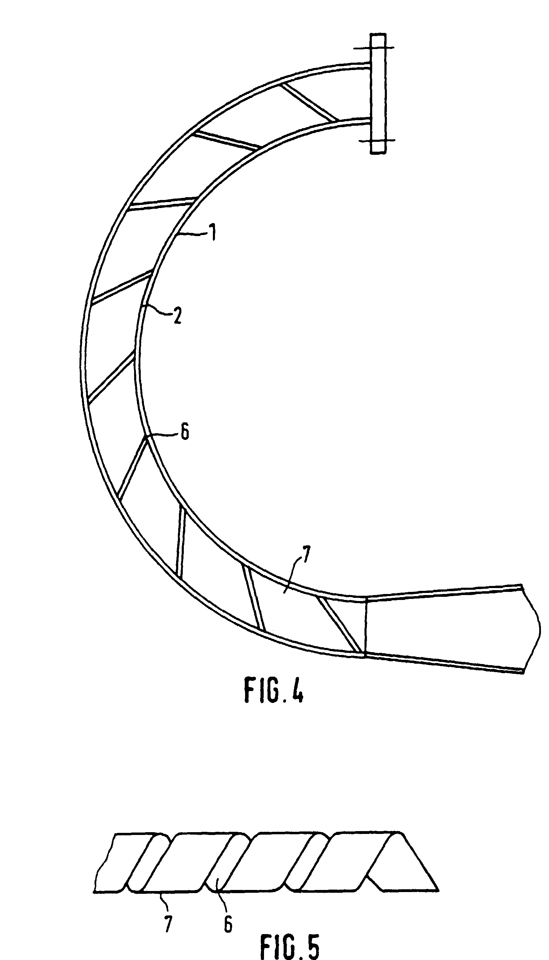

Bei geringem Platzangebot für einen Katalysator erscheint es sinnvoll, die ohnehin vorhandenen gekrümmten Teile der Mantelrohre ebenfalls zu nutzen. In Figur 4 wird ein Mantelrohr 1 in Form eines Krümmers ebenfalls für die Unterbringung eines Katalysators genutzt. Günstig ist es dabei, eine Metallfolie 2 einsetzen zu können, die aus einem Stück gefertigt ist. Eine Montage in einem gekrümmten Mantelrohr 1 wird dadurch erheblich vereinfacht. Gleichzeitig muß für eine gute Durchmischung des Abgases gesorgt werden. Als Störung der Strömung bietet sich dazu z. B. ein bei der Fertigung entstehender Spalt 6 an.

Figur 5 zeigt eine aus einem Stück gefertigte Metallfolie 7 in einer Wendelform mit zugehörigen Turbulenzspalten 6.

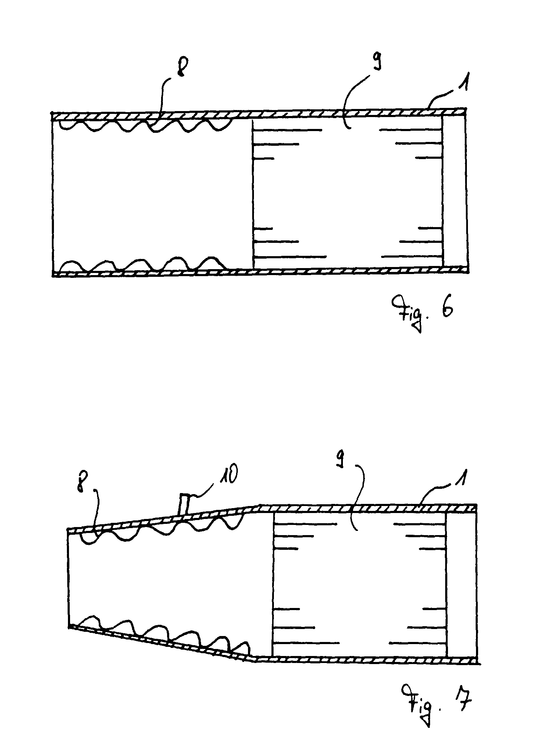

Figur 6 zeigt einen erfindungsgemäßen Katalysator als Vorkatalysator 8 mit nachgeordnetem Hauptkatalysator, wobei der Vorkatalysator 8 etwas beabstandet vom Mantelrohr 1 sein kann. Dadurch ist es möglich, einen Teil des Abgasstromes zwischen dem Mantelrohr 1 und dem Vorkatalysator 8 zu führen. Dort dient dieser Teil als eine Isolierschicht gegenüber der Umgebung für den im Inneren des Vorkatalysators 8 strömenden Abgasstrom. Einzelne Wellungen der Metallfolie oder Metallfolien können in einer günstigen Ausführungsform zur Beabstandung des Vorkatalysators 8 direkt am Mantelrohr 1 aufliegen, vorteilhafterweise so, daß sie entsprechende Kanäle zwischen dem Mantelrohr 1 und dem Vorkatalysator 8 ausbilden. Eine weitere Ausgestaltung sieht entsprechende Vorrichtungen wie beispielsweise Höcker vor, die für eine Beabstandung des Vorkatalysators 8 sorgen.

Figur 7 zeigt eine weitere vorteilhafte Ausgestaltung eines Vorkatalysators 8 mit nachgeschaltetem Hauptkatalysator 9. Der Vorkatalysator 8 führt aufgrund seiner konischen Form eine Strömungsvergleichmäßigung durch. Indem er in der Lage ist, den Abgasmassenstrom zu unterteilen, kann er dem nachgeordneten Hauptkatalysator 9 insbesondere in den Randbereichen den abgetrennten Teilstrom an Abgas zuführen. Dieser Teilstrom zwischen dem Mantelrohr 1 und dem Vorkatalysator 8 wird aufgrund der exothermen Umsetzung unverbrannter Kohlenwasserstoffe erhitzt. Diese Wärme wird dann an die Randbereiche des Hauptkatalysators 9 weitergegeben, der sich dadurch insgesamt sehr viel schneller und auch gleichmäßiger bis zum Erreichen der Anspringtemperatur aufheizt. Der konusförmige Vorkatalysator 8 weist günstigerweise eine Aufspreizung von etwa 7° in Bezug zu einer imaginären mittigen Stromlinie auf. Es hat sich bei Versuchen herausgestellt, daß dann das Strömungsprofil bei konischer Erweiterung auch einen günstigen Massentransport des Abgases in Randbereichen des Konus ausbildet. Geringere Gradneigungen, etwa 3° bis 6°, auch 5°, haben dementsprechend auch ein gleichmäßigeres Strömungsprofil. Aufgrund der Beeinflussung des Strömungsprofiles und damit des Massentransportes in Randbereiche des Vorkatalysators 8 durch Änderungen der Reynoldszahl sowie anderer Kennzahlen können vorteilhafte Neigungswinkel des Konus jedoch auch größer, etwa 10° bis 15°, ausfallen. Einen weiteren Einfluß nimmt auch die Gestalt des strömungsmäßig vor dem Vorkatalysator 8 liegenden Mantelrohres 1 auf das Strömungsverhalten des Abgases. Sind Krümmungen in nahen Bereichen zum Vorkatalysator 8 vorhanden, kann der Konus des Vorkatalysators 8 auch abschnittsweise ganz unterschiedliche Neigungswinkel aufweisen, insbesondere auch so, daß ein Querschnitt des Vorkatalysators 8 oval geformt ist. Die Ausrichtung des Vorkatalysators 8 verläuft in einer vorteilhaften Ausführungsform in etwa parallel zum Mantelrohr 1. Bei einer konusförmigen Erweiterung führt das dazu, daß im mittigen Bereich aufgrund der Querschnittszunahme ein etwas anderer Druck und mittlere Geschwindigkeit als im Bereich zwischen dem Mantelrohr und dem Vorkatalysator 8 herrscht. Der Druck ist vorteilhafterweise etwas größer und führt so zu einer günstigen An- und Durchströmung der Randbereiche des nachfolgenden Hauptkatalysators 9. Der Vorkatalysator 8 als solches kann dieses unterstützend entsprechend gestaltet sein. Beispielsweise kann die Wellung zu im Querschnitt gleichbleibenden Kanälen führen. Zur Erzielung eines Düseneffektes ist es ebenfalls möglich, den Querschnitt über die Länge zu verringern oder umgekehrt, zumindest in einigen Bereichen, zu vergrößern. Dadurch ist dann ein größerer Randquerschnittsbereich durch quasi einen Kanal mit Abgas beaufschlagbar. Die Kanäle bzw. Wellungen verlaufen in einer günstigen Gestaltung nicht nur längs, sondern auch etwa wendel- bzw. spiralförmig. Der Weg des Abgases im Vorkatalysator 8 bzw. zwischen diesem und dem Mantelrohr 1 wird dadurch verlängert und führt zu einer guten Umsetzung unverbrannter Kohlenwasserstoffe. Der Hauptkatalysator 9 wiederum weist einen derartigen Abstand zum Vorkatalysator 8 auf, daß seine Randbereiche auch mit einem hohen Anteil des Abgasmassenstromes beaufschlagt werden. Dieses führt zu einer schnellen Aufhitzung des Hauptkatalysators 9. Eine vorteilhafte Ausgestaltung sieht eine Unmittelbarkeit zwischen einem Teilauslaßstrom aus dem Vorkatalysator 8 und diesem dann als Teileinlaßstrom im Hauptkatalysator 9 vor. Dazu können beide auch miteinander verbunden sein. In einer Weiterentwicklung weist der Vorkatalysator 8 auch über seinen Verlauf Öffnungen oder auch andere Gestaltungen auf, insbesondere so, daß das durch diese geführte Abgas größere Bereiche des Hauptkatalysators 9 beaufschlagt. Entsprechende Führungen wie kleine Wände am Mantelrohr 1 und/oder am Vorkatalysator 8 führen vorteilhafterweise zu einer weiteren Zielgerichtetheit des strömenden Abgases auf den Hauptkatalysator 9 zu. Mittels eines elektrischen Anschlusses 10 kann der Vorkatalysator 8 elektrisch beheizt werden, wobei aufgrund seiner Bauform nur eine geringe elektrische Energie benötigt wird. Deswegen wird die Anspringtemperatur eines dann voll wirksamen Katalysators schneller erreicht, so daß aufgrund der dann stattfindenden Umsetzung der Abgase der nachgeschaltete Katalysator 9, der ebenfalls elektrisch beheizbar sein kann, entsprechend freigewordene Wärmequantitäten zum Aufheizen aufnehmen kann. Der nachgeschaltete Katalysator 9 ist insbesondere so ausgeführt, daß er auf den gesamten Querschnitt des Mantelrohrs 1 wirkt.

Die vorliegende Erfindung dient insbesondere zur teilweisen Reduzierung des Kohlenwasserstoffanteils in Abgasen mit sehr hohen Anteilen an Kohlenwasserstoff.

### BEZUGSZEICHENLISTE

- 1: Mantelrohr
- 2: Metallfolie
- 3: Innenoberfläche
- 4: Stirnbereich des Mantelrohres
- 5: Perforationslöcher
- 6: Spalt
- 7: Wendelförmige Metallfolie
- 8: vorgeschalteter Katalysator, Vorkatalysator
- 9: nachgeordneter Katalysator, Hauptkatalysator
- 10: elektrischer Anschluß

## Patentansprüche

1. Katalysator für Fahrzeuge mit Verbrennungsmotoren, insbesondere zum katalytischen Reinigen von Abgas mit großen Anteilen von Kohlenwasserstoffen, aus einem Mantelrohr (1), in welchem mindestens eine zumindest teilweise mit katalytisch aktivem Material beschichtete Metallfolie (2) in der Nähe der Innenoberfläche (3) des Mantelrohres (1) angeordnet ist, wobei der überwiegende Teil der Querschnittsfläche des Mantelrohres (1) in einem Zentralbereich zusammenhängend frei von Metallfolie (2) ist,
dadurch gekennzeichnet,
daß die Metallfolie (2) zumindest in Teilbereichen strukturiert, insbesondere wellenförmig, ist und Kanäle (4) bildet, wobei die Größe und Form der Strukturen der Metallfolie (2) so ist, daß die Kanäle (4) eine Querschnittsfläche haben, wie sie bei Wabenkörpern mit 25 bis 200 cpsi (cells per squareinch) auftritt, wobei der Zentralbereich von einem strukturierten Teilbereich der Metallfolie (2) begrenzt wird.

2. Katalysator nach Anspruch 1, bei welchem an der Innenoberfläche (3) des Mantelrohres (1) mindestens eine Lage einer Metallfolie (2) mit katalytisch aktivem Material als separater Körper über zumindest einen Teil des Innenumfangs vorgesehen ist.

3. Katalysator nach Anspruch 1 oder 2, bei welchem die Metallfolie (2) zumindest im Stirnbereich (4) des Mantelrohres (1) eingelötet ist.

4. Katalysator nach einem der Ansprüche 1 bis 3, bei welchem zwei bis sechs Lagen Metallfolie (2) angeordnet sind, die so strukturiert sind, daß sie für das Abgas durchlässige Kanäle bilden.

5. Katalysator nach Anspruch 4, bei welchem die Lagen der Metallfolie spiralförmig gewickelt sind.

6. Katalysator nach Anspruch 4, bei welchem die Lagen der Metallfolie wendelförmig gewickelt sind.

7. Katalysator nach Anspruch 4, bei welchem die Lagen der Metallfolie schraubenförmig gewickelt sind.

8. Katalysator nach einem der Ansprüche 1 bis 7, bei welchem die Metallfolie (2) Perforationslöcher (5) aufweist.

9. Katalysator nach Anspruch 8, bei welchem die Perforationslöcher (5) einen Durchmesser im Bereich von 2 mm bis 6 mm aufweisen.

10. Katalysator nach Anspruch 8, bei welchem die Katalysatorfolie (2) in die Innenoberfläche (3) des Mantelrohres (1) in einem Abschnitt glatt eingelötet ist.

11. Katalysator nach einem der Ansprüche 1 bis 10, bei welchem das Mantelrohr (1) gerade verläuft.

12. Katalysator nach einem der Ansprüche 1 bis 10, bei welchem das Mantelrohr (1) gekrümmt verläuft.

13. Katalysator nach einem der Ansprüche 1 bis 12, bei welchem das Mantelrohr (1) zylindrisch ist.

14. Katalysator nach einem der Ansprüche 1 bis 13, bei welchem das Mantelrohr (1) sich in Strömungsrichtung konisch erweitert.

15. Katalysator nach einem der Ansprüche 1 bis 12 oder 13, bei welchem die Querschnittsform des Mantelrohres (1) oval ist.

16. Katalysator nach einem der Ansprüche 1 bis 15, bei welchem die Metallfolien aus einem modifizierten hochtemperatur-korrosionsbeständigen Material, insbesondere mit einer ähnlichen Zusammensetzung wie der Werkstoff 1.4767, besteht.

17. Katalysator nach einem der Ansprüche 1 bis 16, bei welchem dieser elektrisch beheizbar ist.

18. Katalysator nach einem der Ansprüche 1 bis 16, bei welchem diesem als Vorkatalysator (8) ein Hauptkatalysator (9) nachgeschaltet ist.

## Claims

1. A catalyst for vehicles with internal combustion engines, especially for catalytic cleaning of exhaust gas having large proportions of hydrocarbons, comprising a jacket tube (Z), in which at least one metal foil (2) at least partially coated with a catalytically active material is disposed in the vicinity of the inner surface (3) of the jacket tube (1), and the predominant portion of the cross-sectional area of the jacket tube (1), in a central cohesive region, is free of metal foil,
characterized in that
the metal foil (2) is structured, especially in corrugated fashion, at least in partial regions, and forms channels (4), in which the size and shape of the structures of the metal foil (2) is such that the channels (4) of a cross-sectional area of the kind that occurs in honeycomb bodies that have from 25 to 200 cpsi (cell per square inch), and the central region is defined by a structured partial region of the metal foil (2).

2. The catalyst of claim 1, in which at least one layer of a metal foil (2) with catalytically active material is provided as a separate body on the inside surface (3) of the jacket tube (1), over at least a portion of the inside circumference.

3. The catalyst of claim 1 or 2, in which the metal foil is soldered into place at least in the face-end region (4) of the jacket tube (1).

4. The catalyst of one of claims 1-3, in which from two to six layers of metal foil (2) are arranged, which are structured such that they form channels through which the exhaust gas can flow.

5. The catalyst of claim 4, in which the layers of the metal foil are wound in a spiral.

6. The catalyst of claim 4, in which the layers of the metal foil are wound in a coil.

7. The catalyst of claim 4, in which the layers of the metal foil are wound in a helix.

8. The catalyst or one of claims 1-7, in which the metal foil (2) has perforation holes (5).

9. The catalyst of claim 8, in which the perforation holes (5) have a diameter in the range from 2 mm to 6 mm.

10. The catalyst of claim 8, in which the catalyst foil (2) is soldered in place smoothly in one portion into the inside surface of the jacket tube (1).

11. The catalyst of one of claims 1-10, in which the jacket tube (1) extends rectilinearly.

12. The catalyst of one of claims 1-10, in which the jacket tube (1) extends in curved form.

13. The catalyst of one of claims 1-12, in which the jacket tube is cylindrical.

14. The catalyst of one of claims 1-13, in which the jacket tube widens conically in the flow direction.

15. The catalyst of one of claims 1-12 or 13, in which the cross-sectional shape of the jacket tube (2) is oval.

16. The catalyst of one of claims 1-15, in which the metal foils comprise a modified high-temperature- and corrosion-proof material, especially having a composition similar to the material 1.4767.

17. The catalyst of one of claims 1-16, in which the catalyst is electrically heatable.

18. The catalyst of one of claims 1-16, in which the catalyst, as a precatalyst (8), is followed by a main catalyst (9).

## Revendications

1. Catalyseur destiné à des véhicules équipés de moteurs à combustion interne, notamment à l'épuration catalytique de gaz d'échappement contenant de grandes proportions d'hydrocarbures, constitué d'un tube d'enveloppe (1) dans lequel au moins une feuille métallique (2) revêtue, au moins partiellement, de matériau catalytiquement actif est disposée à proximité de la face interne (3) du tube d'enveloppe (1), la majeure partie de la surface en section transversale du tube d'enveloppe (1) étant libre de feuille métallique (2) dans une zone centrale ininterrompue,
caractérisé en ce que
la feuille métallique (2) est structurée, au moins dans des zones partielles, notamment ondulée, et forme des canaux (4), la taille et la forme des structures de la feuille métallique (2) étant telles que les canaux (4) ont une surface en section transversale comme celle que présentent des corps alvéolaires de 25 à 200 cpsi (cells per square inch), la zone centrale étant délimitée par une zone partielle structurée de la feuille métallique (2).

2. Catalyseur selon la revendication 1, dans le cas duquel au moins une couche d'une feuille métallique (2) revêtue de matériau catalytiquement actif est prévue en tant que corps séparé sur la face interne (3) du tube d'enveloppe (1), au moins sur une partie de la circonférence interne.

3. Catalyseur selon la revendication 1 ou 2, dans le cas duquel la feuille métallique (2) est brasée, au moins dans la zone frontale (4) du tube d'enveloppe (1).

4. Catalyseur selon l'une des revendications 1 à 3, dans le cas duquel il est disposé deux à six couches de feuilles métalliques (2), qui sont structurées de telle sorte qu'elles forment des canaux pouvant être traversés par les gaz d'échappement.

5. Catalyseur selon la revendication 4, dans le cas duquel les couches de feuilles métalliques sont enroulées en forme de spirale.

6. Catalyseur selon la revendication 4, dans le cas duquel les couches de feuilles métalliques sont enroulées de façon hélicoïdale.

7. Catalyseur selon la revendication 4, dans le cas duquel les couches de feuilles métalliques sont enroulées en forme de vis.

8. Catalyseur selon l'une quelconque des revendications 1 à 7, dans le cas duquel la feuille métallique (2) comporte des trous de perforation (5).

9. Catalyseur selon la revendication 8, dans le cas duquel les trous de perforation (5) ont un diamètre se situant dans la plage de 2 mm à 6 mm.

10. Catalyseur selon la revendication 8, dans le cas duquel la feuille (2) de catalyseur est brasée de façon plane dans une section de la face interne (3) du tube d'enveloppe (1).

11. Catalyseur selon l'une quelconque des revendications 1 à 10, dans le cas duquel le tube d'enveloppe (1) est droit.

12. Catalyseur selon l'une quelconque des revendications 1 à 10, dans le cas duquel le tube d'enveloppe (1) est coudé.

13. Catalyseur selon l'une quelconque des revendications 1 à 12, dans le cas duquel le tube d'enveloppe (1) est cylindrique.

14. Catalyseur selon l'une quelconque des revendications 1 à 13, dans le cas duquel le tube d'enveloppe (1) s'élargit de façon conique dans le sens de l'écoulement.

15. Catalyseur selon l'une quelconque des revendications 1 à 12 ou 13, dans le cas duquel la forme en section transversale du tube d'enveloppe (1) est ovale.

16. Catalyseur selon l'une quelconque des revendications 1 à 15, dans le cas duquel les feuilles métalliques sont constituées d'un matériau modifié résistant aux hautes températures et à la corrosion, ayant notamment une composition analogue au matériau 1.4767.

17. Catalyseur selon l'une quelconque des revendications 1 à 16, dans le cas duquel celui-ci peut être chauffé électriquement.

18. Catalyseur selon l'une quelconque des revendications 1 à 16, dans le cas duquel un catalyseur principal (9) est disposé en aval de celui-ci en tant que pré-catalyseur (8).
